# EUROPÄISCHE PATENTANMELDUNG

(11) **EP 1 288 397 A2**
(43) Veröffentlichungstag der Anmeldung: **05.03.2003**
(21) Anmeldenummer: 02015794.7
(22) Anmeldetag: 15.07.2002
(51) Int. Cl.: E04H 9/02, E01D 19/00

(54) **Kraftabsorptionsvorrichtung**

(30) Priorität: 31.08.2001 DE 10142709
(71) Anmelder: Maurer Söhne GmbH & Co. KG, 80750 München (DE)
(72) Erfinder: Braun, Christian, Dr., 83607 Holzkirchen (DE); Distl, Johann, 82008 Unterhaching (DE)
(74) Vertreter: Grosse, Wolfgang, Dipl.-Ing.

(57) **Zusammenfassung**

Es wird eine Kraflabsorptionsvorrichtung vorgeschlagen, die insbesondere zur Aufnahme und Ableitung von Kräften in Brückenbauwerken dient. Diese Vorrichtung umfaßt ein Gehäuse (2) mit wenigstens einer Hydraulikflüssigkeitskammer (5). In der Hydraulikflüssigkeitskammer (5) ist ein beweglicher Hydraulikkolben (3) gelagert, der von einer Kolbenstange (4) geführt ist. Auf diese Weise werden auf den Hydraulikkolben (3) wirkende Kräfte auf die Hydraulikflüssigkeit übertragen. Es ist ferner wenigstens eine mit der Hydraulikflüssigkeitskammer (5) verbundene, mit Hydraulikflüssigkeit gefüllte Ausgleichskammer (11) vorgesehen, welche in ihrem Volumen in Abhängigkeit von der Dichte der Hydraulikflüssigkeit veränderbar ist. Dabei ist die Kolbenstange (4) wenigstens teilweise hohlraumförmig ausgebildet, um die Ausgleichskammer (11) im Inneren des Gehäuses (2) und/oder in der Kolbenstange (4) zu bilden.

## Beschreibung

Die vorliegende Erfindung betrifft eine Kraftabsorptionsvorrichtung nach dem Oberbegriff des Anspruches 1. Eine solche Kraftabsorptionsvorrichtung wird insbesondere im Brückenbau zur Aufnahme und Ableitung von Kräften eingesetzt.

Bei der Konstruktion von Brücken in Erdbebengebieten werden im allgemeinen zwischen der Brücke und dem Brückenpfeiler bzw. dem Widerlager Kraftabsorptionsvorrichtungen vorgesehen, die entweder als blockierendes System arbeiten, d. h. es wird auf diese lediglich Kraft übertragen, oder als dämpfendes System funktionieren, d. h. Kraftstöße werden zusätzlich gedämpft. Das Prinzip, nach dem solche Kraftabsorptionsvorrichtungen funktionieren, beruht auf der Umwandlung von kinetischer Stoßenergie in Wärmeenergie, wobei die Stoßenergie über einen in einem Hydraulikflüssigkeitsbad gelagerten Hydraulikkolben auf das Hydraulikflüssigkeitsbad übertragen wird. Hierdurch wird die Erwärmung der Hydraulikflüssigkeit und die Absorption bzw. Dämpfung von Stößen bewirkt.

Die Erwärmung des Hydraulikflüssigkeitsbades bei Stößen führt zur Ausdehnung der Hydraulikflüssigkeit. Ferner führt die Umgebungsluft ebenfalls zur Erwärmung und Ausdehnung der Hydraulikflüssigkeit. Deshalb müssen in solchen Kraftabsorptionsvorrichtungen Ausgleichkammern geschaffen werden, welche eine Ausdehnung der Hydraulikflüssigkeit ermöglichen. Solche Ausgleichskammern sind bei den Vorrichtungen nach dem Stand der Technik außerhalb des Hydraulikkolbens bzw. der Kolbenstange, die den Hydraulikkolben fuhrt, vorgesehen. Dies hat jedoch den Nachteil, daß solche Ausgleichskammern durch äußere Einflüsse, beispielsweise durch Vandalismus, leicht beschädigt werden können und daß sie zusätzlich Platz im Gesamtsystem benötigen.

Aufgabe der Erfindung ist es deshalb, eine Kraftabsorptionsvorrichtung zu schaffen, die vor Beschädigungen geschützt ist und in ihrem Aufbau sehr kompakt ist.

Diese Aufgabe wird durch die Kraftabsorptionsvorrichtung gemäß dem unabhängigen Anspruch 1 gelöst. Vorteilhafte Ausgestaltungen der Erfindung sind in den abhängigen Ansprüchen definiert.

Die erfindungsgemäße Kraftabsorptionsvorrichtung umfasst ein Gehäuse mit mindestens einer Hydraulikflüssigkeitskammer, wobei in der Hydraulikflüssigkeitskammer ein beweglicher Hydraulikkolben gelagert ist, der von einer Kolbenstange geführt ist. Die auf den Hydraulikkolben wirkenden Kräfte sind dabei auf die Hydraulikflüssigkeit übertragbar. Die Vorrichtung weist ferner wenigstens eine mit der Hydraulikflüssigkeitskammer verbundene, mit Hydraulikflüssigkeit gefüllte Ausgleichskammer auf, welche in ihrem Volumen in Abhängigkeit von der Dichte der Hydraulikflüssigkeit veränderbar ist. Bei der erfindungsgemäßen Vorrichtung ist die Kolbenstange dabei wenigstens teilweise hohlraumförmig ausgebildet, wodurch die Ausgleichskammer im Inneren des Gehäuses und/oder in der Kolbenstange geschaffen wird. Diese Ausgleichskammer ist somit im wesentlich geringeren Maße Beschädigungen durch äußere Einflüsse ausgesetzt, da sie im Innenbereich des Gehäuses liegt. Da ferner im Gehäuseinneren ein Hohlraum zur Ausbildung der Ausgleichskammer geschaffen wird, der bei bekannten Kraftabsorptionsvorrichtungen ungenutzt bleibt, ist die erfindungsgemäße Vorrichtung in ihrer Bauweise wesentlich kompakter. Darüber hinaus ermöglicht die erfindungsgemäße Kraftabsorptionsvorrichtung die Ausbildung des Hohlraums in dem Teil der Kolbenstange, der weder druck- noch zugbelastet ist, so dass ein Hohlraum in der Kolbenstange auch nicht zu Einbußen in der Belastbarkeit der Kraftabsorptionsvorrichtung führt.

In einer bevorzugten Ausführungsform der Erfindung ist die Ausgleichskammer direkt in der Kolbenstange selbst vorgesehen. Hierdurch wird die Ausgleichskammer komplett vom Gehäuse entkoppelt, wodurch ein besonders guter Schutz gegen äußere Einflüsse gewährleistet wird.

In einer anderen Ausführungsform wird die Kolbenstange und der Hydraulikkolben auf einem im wesentlichen hohlen Innenrohr geführt und die Ausgleichskammer umfasst einen Hohlraum in diesem Innenrohr. Durch diese Konstruktion wird als weiterer Vorteil erreicht, daß die Menge an Hydraulikflüssigkeit wesentlich reduziert werden kann, da die Hydraulikflüssigkeitskammer im wesentlichen durch den Zwischenraum zwischen dem hohlen Innenrohr und dem Gehäuse der Vorrichtung gebildet wird und somit in ihrem Volumen stark reduziert ist.

In einer weiteren Ausführungsform der Erfindung wird die Volumenveränderung der Ausgleichskammer durch einen zweiten verschiebbaren Kolben oder einen Membranbalg bewirkt, der vorzugsweise von der einen Seite mit Gasdruck beaufschlagt ist. Soweit im Folgenden auf den zweiten verschiebbaren Kolben Bezug genommen wird, soll diese Bezugnahme auch einen Membranbalg umfassen. Der Gasdruck wird beispielsweise dadurch erzeugt, daß ein Füllraum an einem Ende der Vorrichtung vorgesehen ist, wobei dieser Füllraum mit dem Gas zur Erzeugung des Gasdruckes befüllt ist.

Um es zu ermöglichen, daß sich die Kraftabsorptionsvorrichtung vom gestauchten Zustand von selbst wieder in ihre Normalstellung zurückbewegt, ist in einer bevorzugen Ausführungsform der Füllraum derart ausgestaltet, daß der Gasdruck die Kolbenstange zur Erzeugung einer Rückstellkraft verschieben kann.

In der Ausführungsform der Vorrichtung, in der die Ausgleichskammer einen Hohlraum in der Kolbenstange umfasst, kann auch der Füllraum zumindest teilweise durch einen Bereich des Hohlraumes in der Kolbenstange gebildet sein.

In der Ausführungsform, in der die Kolbenstange auf einem hohlen Innenrohr geführt wird, kann der Füllraum einen Hohlraum im Innenrohr und zusätzlich auch noch einen Hohlraum in der Kolbenstange umfassen.

Statt der Erzeugung einer Rückstellkraft mittels Gasdruckes bzw. zur Verstärkung der Rückstellkraft können die Vorderseite und Rückseite des Hydraulikkolbens unterschiedliche Flächen aufweisen. Da die Drücke auf beiden Flächen des Hydraulikkolbens gleich groß sind, führt dies zu einer resultierenden Kraft, die von der Seite des Kolbens mit der größeren Fläche auf die Seite des Kolbens mit der geringeren Fläche gerichtet ist.

Um eine Fluidverbindung zwischen der Ausgleichskammer und der Hydraulikflüssigkeitskammer vorzusehen, sind diese beiden Kammern vorzugsweise über eine Bohrung und/oder ein Ventil miteinander verbunden.

Vorzugsweise sind im Hydraulikkolben wenigstens eine Bohrung und/oder ein Ventil vorgesehen, welche die Vorder- und Rückseite des Hydraulikkolbens miteinander verbinden und durch welche Hydraulikflüssigkeit strömt, wenn auf die Vorrichtung Stoßkräfte ausgeübt werden.

In einer weiteren bevorzugten Ausführungsform ist in der Kraftabsorptionsvorrichtung ferner eine Sensorvorrichtung vorgesehen, welche die Ermittlung der Position des Hydraulikkolbens und/oder des zweiten Kolbens ermöglicht. Diese Sensorvorrichtung besteht in einer vorteilhaften Ausgestaltung der Erfindung aus wenigstens einer ersten, in das Innere der Kolbenstange vorstehenden Fühlerstange und einer an einem Ende der Kolbenstange angeordneten, relativ zur ersten Fühlerstange bewegbaren, ersten Induktionsspule. Durch die Bewegung der ersten Induktionsspule relativ zur ersten Fühlerstange aufgrund der Hin- und Herbewegung des Hydraulikkolbens wird in der Spule ein elektrisches Signal induziert, welches es ermöglicht, die Position des Hydraulikkolbens zu ermitteln.

Neben einer ersten Fühlerstange und einer ersten Induktionsspule können ferner eine zweite, im Inneren der Kolbenstange angeordnete Fühlerstange und wenigstens eine im zweiten Kolben angeordnete, relativ zur zweiten Fühlerstange bewegbare, zweite Induktionsspule vorgesehen sein. Die zweite Induktionsspule wird dabei gegenüber der zweiten Fühlerstange verschoben, wenn sich der zweite Kolben bewegt. Hierdurch wird in der Induktionsspule eine elektrische Spannung induziert, welche es ermöglicht, die Position des zweiten Kolbens zu ermitteln.

In einer weiteren Ausführungsform der Sensorvorrichtung sind dabei die erste und die zweite Fühlerstange teleskopartig miteinander verbunden. Anstatt relativ zu den Fühlerstangen bewegbare Induktionsspulen vorzusehen, können die Induktionsspulen auch in der Fühlerstange integriert werden und die Positionsermittlung des Hydraulikkolbens und/oder des zweiten Kolbens kann über einen Magneten, bspw. einem Dauermagneten, erfolgen, wobei dieser Dauermagnet relativ zu den Fühlerstangen bewegbar ist.

Durch die Sensorvorrichtung wird es ermöglicht, die Position des Hydraulikkolbens sowie die Position des zweiten Kolbens zu ermitteln, und es können somit Aussagen über den Befüllzustand des Dämpfers und die momentane Wirkung des Dämpfers gemacht werden. Die Sensorvorrichtung ermöglicht somit eine Kontrolle des Zustandes von sowohl der Kraftabsorptionsvorrichtung als auch des Bauwerks selbst.

Weitere Merkmale und Einzelheiten der Erfindung werden durch die nachfolgende detaillierte Beschreibung von bevorzugten Ausführungsformen anhand der beigefügten Figuren ersichtlich, wobei
- Fig. 1: eine Schnittansicht eines ersten Ausführungsbeispiels der erfindungsgemäßen Kraftabsorptionsvorrichtung zeigt;
- Fig. 1A: eine Schnittansicht einer Abwandlung des in Fig. 1 gezeigten Hydraulikkolbens und der damit verbundenen Kolbenstange zeigt;
- Fig.2: eine Schnittansicht eines zweiten Ausführungsbeispiels der erfindungsgemäßen Kraftabsorptionsvorrichtung zeigt;
- Fig. 2A: eine geschnittene Detailansicht des Bereichs des Deckels 20 der Fig. 2 zeigt;
- Fig.3: eine Schnittansicht eines dritten Ausführungsbeispiels der erfindungsgemäßen Kraftabsorptionsvorrichtung zeigt;
- Fig. 4: eine Schnittansicht eines vierten Ausführungsbeispiels der erfindungsgemäßen Kraftabsorptionsvorrichtung zeigt.

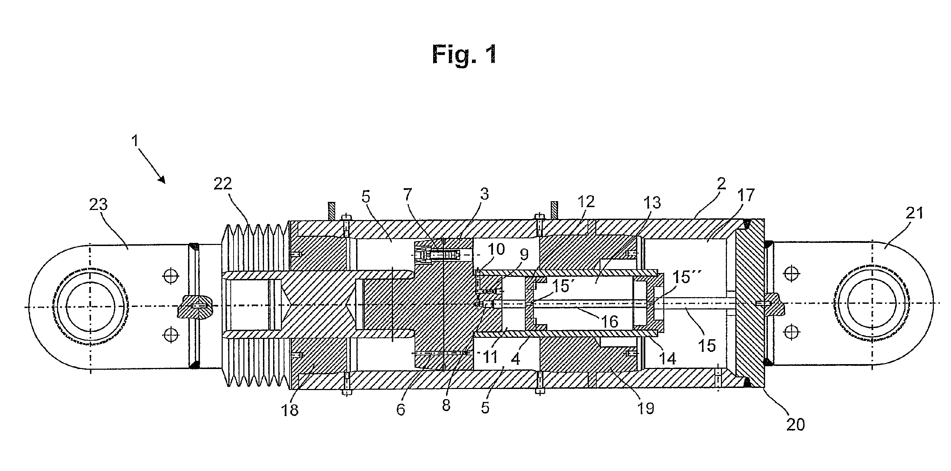

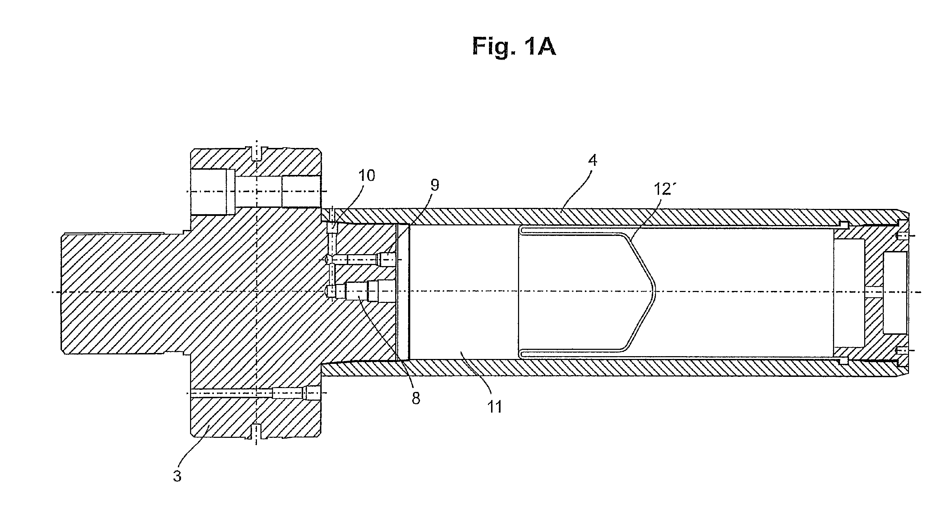

Die in Fig. 1 gezeigte Ausführungsform der erfindungsgemäßen Kraftabsorptionsvorrichtung zeigt einen Dämpfer 1, der insbesondere im Brückenbau zwischen Brücke und Widerlager bzw. Pfeiler eingesetzt wird und vorzugsweise in Erdbebenregionen zur Dämpfung von Erdbebenstößen verwendet wird. Dieser Erdbebendämpfer umfaßt ein zylindrisches Gehäuse 2, welches an seinen beiden Enden durch Zylinderdeckel 18 und 20 begrenzt ist. In dem Gehäuse ist ein Hydraulikkolben 3 in einem Hydraulikölbad 5 gelagert. Der Hydraulikkolben ist an seinen beiden Seiten mit einer Kolbenstange 4 verbunden. Die Kolbenstange wird an einem Ende in dem Zylinderdeckel 18 und an dem anderen Ende in einem im Gehäuse befindlichen Zylinderdeckel 19 geführt. Der Kolben weist in seinem äußeren Bereich sowohl eine durchgehende Bohrung 6 als auch ein Druckbegrenzungsventil 7 auf. Im Falle eines Erdbebens wird auf die eine Seite der Kolbenstange Druck ausgeübt, was zu einer Bewegung des Hydraulikkolbens im Ölbad 5 führt. Dies hat wiederum zum Folge, daß das Öl durch die Bohrung 6 und das Druckbegrenzungsventil 7 gedrückt wird. Hierdurch wird die kinetische Stoßenergie in Wärmeenergie umgewandelt, d.h. das Öl wird beim Durchfluß durch die Bohrung und das Druckbegrenzungsventil erwärmt. Die bei dem soeben beschriebenen Vorgang erzeugte Wärme, aber auch äußere Wärme, führt zur Ausdehnung des Öls. Um eine solche Ausdehnung des Öls zu ermöglichen, ist der Teil der Kolbenstange, der in dem Zylinderdeckel 19 geführt ist, hohlraumförmig ausgebildet. Dieser Hohlraum umfaßt eine mit Öl gefüllte Ausgleichskammer 11, welche über ein Ventil 8, einen Filter 9 und eine Bohrung 10 mit dem Ölbad 5 verbunden ist. Die Ausgleichskammer 11 ist mit einem beweglichen Gaskolben 12 verschlossen, wobei dieser Kolben an einem mit Gas gefüllten Raum 13 angrenzt, der ebenfalls durch den Hohlraum in der Kolbenstange gebildet wird. Dieser Füllraum 13 ist mit einem Deckel 14 verschlossen. Eine Ausdehnung des Hydrauliköls führt somit zur Vergrößerung des Volumens des Ausgleichsraums 11 und somit zur Verschiebung des Gaskolbens 12 gegen den Gasdruck im Füllraum.

In Fig. 1A ist eine Abwandlung der in der Fig. 1 gezeigten Ausführungsform des Hydraulikkolbens und der damit verbundenen Kolbenstange gezeigt. Der einzige Unterschied zu Fig. 1 besteht darin, dass statt einem beweglichen Gaskolben 12 ein Membranbalg 12' zur Veränderung des Volumens der Ausgleichskammer 11 vorgesehen ist.

Wenn der in Fig. 1 gezeigte Dämpfer aufgrund eines Stoßes zusammengedrückt wird, bewegt er sich anschließend nicht in seine ursprüngliche Lage zurück. Dies liegt daran, daß die sich im Ölbad befindenden Stirnflächen des Kolbens gleich groß sind und somit die auf den Kolben wirkenden Kräfte auf beiden Seiten des Kolbens identisch sind. Das in der Kolbenstange 4 vorgesehene Gas bewirkt keine Verschiebung der Kolbenstange, da es in der Kolbenstange mittels des Deckels 14 eingeschlossen ist und dadurch lediglich auf das Öl drückt.

Durch eine kleine Abwandlung dieses Dämpfers aus Fig. 1 kann bewirkt werden, daß der Dämpfer eine Zentrierfunktion hat, d.h. daß er sich selbständig vom gestauchten Zustand in seine ursprüngliche Lage zurückbewegt. Die konstruktive Veränderung besteht darin, daß der Deckel 14 weggelassen und der Leerraum 17 durch ein Gasfüllventil nach außen abgedichtet wird. Dies hat zur Folge, daß das Gas nunmehr nicht nur im Füllraum 13, sondern auch in dem an den Deckel 20 angrenzenden Leerraum 17 vorliegt. Hierdurch kann der Gasdruck die Kolbenstange 4 und somit den Hydraulikkolben 3 verschieben. Nachdem der Dämpfer durch einen Stoß gestaucht wurde, drückt das Gas die Kolbenstange und den Hydraulikkolben in ihre ursprünglichen Stellungen zurück.

Der in Fig. 1 gezeigte Dämpfer umfasst ferner eine Sensorvorrichtung zur Ermittlung der Position des beweglichen Gaskolbens 12 sowie der Position des Hydraulikkolbens 3. Diese Sensorvorrichtung besteht aus einer ersten Fühlerstange 15 und einer zweiten Fühlerstange 16. Die erste Fühlerstange erstreckt sich von dem Deckel 14 über den Leerraum 17 zu dem Deckel 20. Die zweite Fühlerstange erstreckt sich von der einen Seite des Hydraulikkolbens durch den Gaskolben 12 hindurch zu dem Deckel 14. Beide Fühlerstangen sind vorzugsweise teleskopartig miteinander verbunden. Die erste Fühlerstange 15 wirkt mit einer Induktionsspule 15' im Deckel 14 zusammen. Durch die Bewegung des Kolbens 3 wird die Induktionsspule 15' entlang der Fühlerstange 15 bewegt, was zur Induktion eines Stromes und Erzeugung eines Meßsignals zur Ermittlung der Position des Kolbens führt. In gleicher Weise wirkt die zweite Fühlerstange 16 mit einer in dem Gaskolben 12 vorgesehenen Induktionsspule 16' zusammen. Durch die Bewegung des Gaskolbens entlang der Fühlerstange 16 wird Strom in dieser Spule induziert, so daß ein Meßsignal zur Ermittlung der Position des Gaskolbens erzeugt wird. Durch diese Meßsignale kann der Füllzustand des Dämpfers, die momentane Wirkung des Dämpfers sowie der Bauwerkszustand ermittelt und kontrolliert werden.

Zur Befestigung des Dämpfers im Bauwerk ist das Gehäuse 2 an seinen Stirnseiten jeweils mit Gelenkköpfen 21 und 23 verbunden, die wiederum mit der Brücke bzw. dem Brückenwiderlager verbunden sind. Zwischen Gelenkkopf 23 und Zylinderdeckel 18 ist ferner ein Faltenbalg 22 vorgesehen, der sich entsprechend der Bewegung der Kolbenstange auseinanderdrückt bzw. zusammenzieht.

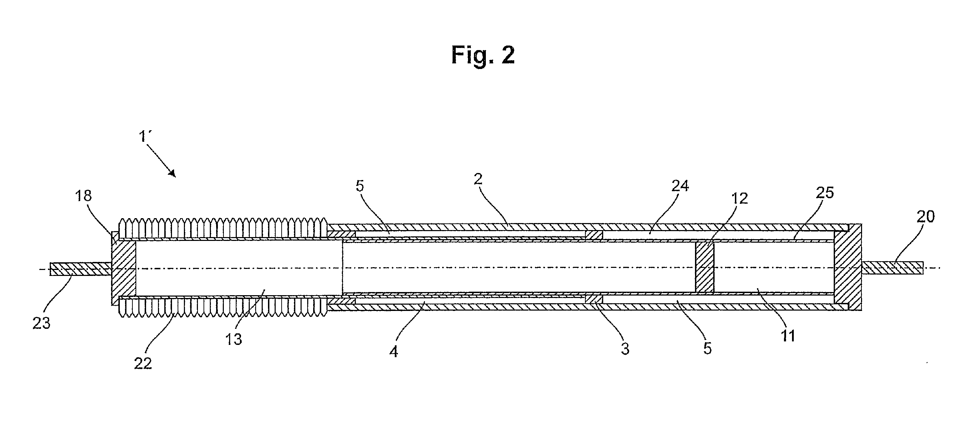

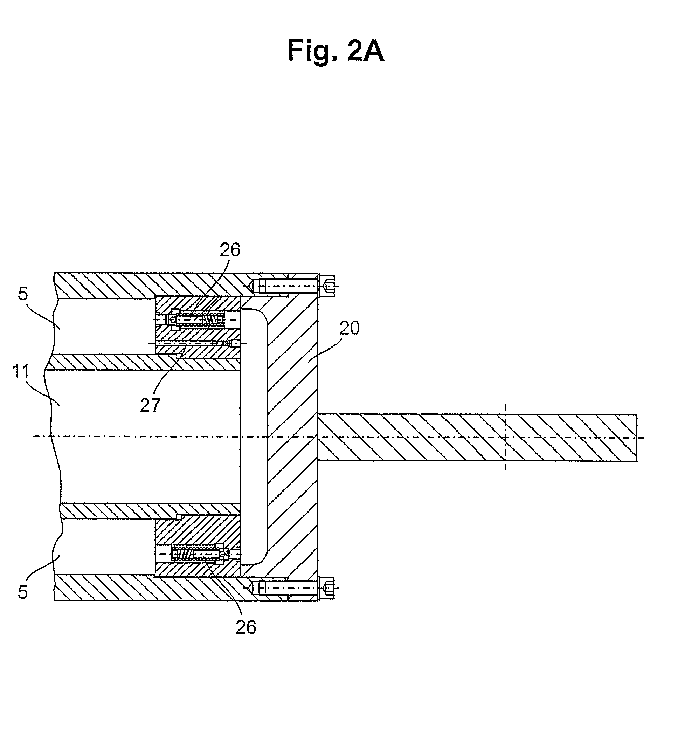

In Fig. 2 ist eine Abwandlung des Erdbebendämpfers nach Fig. 1 gezeigt. Die Bauteile in Fig. 2, die denen der Fig. 1 entsprechen, sind dabei mit den gleichen Bezugszeichen versehen. Das Funktionsprinzip des Dämpfers 1' aus Fig. 2 ist das gleiche wie in Fig. 1. Im Unterschied zu Fig. 1 besteht jedoch der Hydraulikkolben aus einem zylindrischen Ring 3, der mit einer hohlen Kolbenstange 4 verbunden ist, wobei diese Kolbenstange auf einem hohlen Innenrohr 24 geführt ist. Der Kolben befindet sich wiederum in einem Hydraulikölbad 5, das größtenteils von dem ringförmigen Zwischenraum zwischen dem Gehäuse 2 und der Kolbenstange 4 bzw. dem Innenrohr 24 gebildet wird. In dem Innenrohr 24 ist der Gaskolben 12 geführt, wobei der Dämpfer in dem Füllraum 13 mit Gas mit einem Druck von ca. 50 bar befüllt ist. Dieses Gas drückt gegen den Gaskolben 12. Der Füllraum erstreckt sich dabei von dem einen Ende des Gehäuses in das Innenrohr 24 bis zum Gaskolben 12 und wird durch den Deckel 18 verschlossen. Auf der Seite des Gaskolbens 12, die entgegengesetzt zum Füllraum liegt, befindet sich die Ausgleichskammer 11, welche über Bohrungen 25 im Innenrohr sowie über (aus Fig. 2 nicht ersichtlichen) Ventilen und Bohrungen im Bereich des Deckels 20 mit dem Ölbad 5 verbunden ist. Dehnt sich das Öl durch Erwärmung aus, vergrößert sich der Ausgleichsraum 11, so daß der Kolben 12 gegen den Gasdruck verschoben wird.

Der in Fig. 2 gezeigte Dämpfer weist auch eine Rückstellfunktion auf, da das Gas im Füllraum 13 die Kolbenstange 4 und damit den Hydraulikkolben 3 verschiebt. Hierdurch wird bewirkt, daß sich ein gestauchter Kolben wieder in seine ursprüngliche Stellung zurückbewegt.

Um eine Verschiebung der Kolbenstange 4 und des Hydraulikkolbens 3 zu bewirken, ist es notwendig, dass zwischen der Ausgleichskammer 11 und dem Ölbad 5 eine Verbindung besteht. Wie bereits oben erwähnt, dienen hierzu Ventile und Bohrungen im Bereich des Deckels 20. Aus Fig. 2A, welche eine Detailansicht im Deckelbereich der Fig. 2 zeigt, sind derartige Ventile 16 bzw. eine Bohrung 27 ersichtlich, die eine Flüssigkeitsbewegung zwischen dem Ausgleichsraum 11 und der Ölkammer 5 ermöglichen.

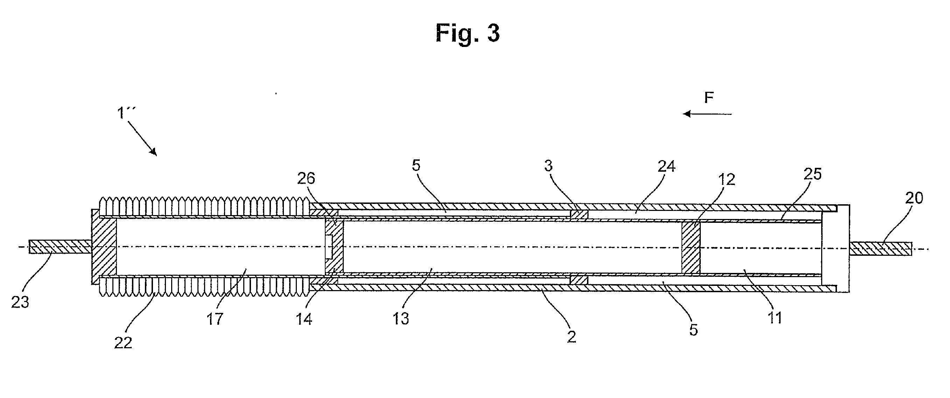

In Fig. 3 ist ein Erdbebendämpfer 1" gezeigt, der im wesentlichen dem Erdbebendämpfer aus Fig. 2 entspricht. Der einzige Unterschied besteht darin, daß in dem Erdbebendämpfer der Fig. 3 ein weiterer Deckel 26 vorgesehen ist, der den Gasfüllraum 13 begrenzt, so daß der Füllraum lediglich zwischen dem Ende des Innenrohrs 24 und dem Gaskolben 12 ausgebildet ist. Dies hat zur Folge, daß der Gasdruck im Vergleich zur Ausführungsform der Fig. 2 eine wesentlich geringere Rückstellkraft verursacht. Die Rückstellfunktion des Dämpfers der Fig. 3 wird dabei dadurch bewirkt, dass die Flächen der Stirnseiten des Hydraulikkolbens, die das Öl im Hydraulikölbad kontaktieren, unterschiedlich groß sind. Dies hat zur Folge, daß die Kräfte, die auf jede Stirnseite ausgeübt werden unterschiedlich groß sind, so daß eine resultierende Kraft F in Richtung von der Stirnseite mit größerer Fläche zur Stirnseite mit geringerer Fläche erzeugt wird, welche die Rückstellung des Dämpfers bewirkt. Wie bereits oben erwähnt, ist diese Rückstellkraft jedoch wesentlich geringer als die Rückstellkraft in der Ausführungsform des Erdbebendämpfers nach Fig. 2.

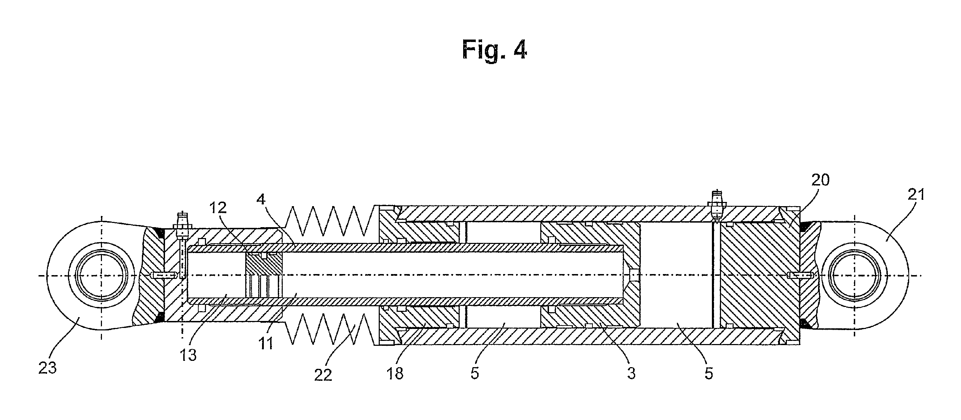

Die in Fig. 4 gezeigte dritte Ausführungsform eines Erdbebendämpfers unterscheidet sich von den anderen Ausführungsformen dahingehend, dass die Kolbenstange einteilig ausgebildet ist und nicht durch den Hydraulikkolben 3 in zwei Abschnitte aufgeteilt ist. Der Hydraulikkolben ist bei der Ausführungsform der Fig. 4 am rechtsseitigen Ende der Kolbenstange vorgesehen, und die Ausgleichskammer 11 ist in einem Hohlraum in der kraftführenden Kolbenstange ausgebildet. Der Hohlraum in der Kolbenstange 4 ist dabei, wie bei den anderen Ausführungsformen, über einen verschiebbaren Gaskolben 12 von einem Gasfüllraum 13 getrennt, der am linksseitigen Ende der Kolbenstange vorgesehen ist. Im Unterschied zu den übrigen Ausführungsformen, ist die Ausgleichskammer somit teilweise auch außerhalb des Gehäuses des Erdbebendämpfers angebracht.

## Patentansprüche

1. Kraftabsorptionsvorrichtung, insbesondere zur Aufnahme und Ableitung von Kräften in Brückenbauwerken, umfassend:
- ein Gehäuse (2) mit wenigstens einer Hydraulikflüssigkeitskammer (5);
- ein in der Hydraulikflüssigkeitskammer (5) gelagerter beweglicher Hydraulikkolben (3), der von einer Kolbenstange (4) geführt ist, wobei auf den Hydraulikkolben (3) wirkende Kräfte auf die Hydraulikflüssigkeit übertragbar sind; und
- wenigstens eine mit der Hydraulikflüssigkeitskammer (5) verbundene, mit Hydraulikflüssigkeit gefüllte Ausgleichskammer (11), welche in ihrem Volumen in Abhängigkeit von der Dichte der Hydraulikflüssigkeit veränderbar ist,
**dadurch gekennzeichnet, daß**
die Kolbenstange (4) wenigstens teilweise hohlraumförmig zur Ausbildung der Ausgleichskammer (11) im Inneren des Gehäuses (2) und/oder in der Kolbenstange (4) ausgestaltet ist.

2. Vorrichtung nach Anspruch 1, **dadurch gekennzeichnet, daß** die Ausgleichskammer (11) einen Hohlraum in der Kolbenstange (4) umfaßt.

3. Vorrichtung nach Anspruch 1, **dadurch gekennzeichnet, daß** die Kolbenstange (4) und der Hydraulikkolben (3) auf einem im wesentlichen hohlen Innenrohr (24) geführt sind und die Ausgleichskammer (11) einen Hohlraum im Innenrohr (24) umfaßt.

4. Vorrichtung nach einem der vorhergehenden Ansprüche, **dadurch gekennzeichnet, daß** die Ausgleichskammer (11) durch einen zweiten verschiebbaren Kolben (12) oder einen Membranbalg (12') begrenzt ist.

5. Vorrichtung nach Anspruch 4, **dadurch gekennzeichnet, daß** der zweite Kolben (12) von der einen Seite mit Gasdruck beaufschlagt ist.

6. Vorrichtung nach Anspruch 5, **dadurch gekennzeichnet, daß** ein Füllraum (13) an einem Ende der Vorrichtung vorgesehen ist, der mit dem Gas zur Erzeugung des Gasdrucks befüllt ist.

7. Vorrichtung nach Anspruch 6, **dadurch gekennzeichnet, daß** der Füllraum derart ausgestaltet ist, daß der Gasdruck die Kolbenstange (4) zur Erzeugung einer Rückstellkraft verschieben kann.

8. Vorrichtung nach einem der vorhergehenden Ansprüche, **dadurch gekennzeichnet, daß** der Füllraum (13) einen Hohlraum in der Kolbenstange (4) umfaßt.

9. Vorrichtung nach Anspruch 3 oder einem der Ansprüche 4 bis 7 in Abhängigkeit von Anspruch 3, **dadurch gekennzeichnet, daß** der Füllraum (13) einen Hohlraum im Innenrohr (24) umfaßt.

10. Vorrichtung nach einem der vorhergehenden Ansprüche, **dadurch gekennzeichnet, daß** die Vorderseite und Rückseite des Hydraulikkolbens (3) unterschiedliche Flächen zur Ausbildung einer Rückstellkraft aufweisen.

11. Vorrichtung nach einem der vorhergehenden Ansprüche, **dadurch gekennzeichnet, daß** die Ausgleichskammer (11) und die Hydraulikflüssigkeitskammer (5) über wenigstens eine Bohrung (10) und/oder ein Ventil (8) miteinander verbunden sind.

12. Vorrichtung nach einem der vorhergehenden Ansprüche, **dadurch gekennzeichnet, daß** der Hydraulikkolben (3) wenigstens eine Bohrung (6) und/oder ein Ventil (7) aufweist, welche die Vorder- und Rückseite des Hydraulikkolbens (3) miteinander verbinden.

13. Vorrichtung nach Anspruch 4 oder einem der Ansprüche 5 bis 12 in Abhängigkeit von Anspruch 4, **dadurch gekennzeichnet, daß** eine Sensorvorrichtung zur Ermittlung der Position des Hydraulikkolbens (3) und/oder des zweiten Kolbens (12) vorgesehen ist.

14. Vorrichtung nach Anspruch 13, **dadurch gekennzeichnet, daß** die Sensorvorrichtung wenigstens eine erste, in das Innere der Kolbenstange (4) vorstehende Fühlerstange (15) und eine an einem Ende der Kolbenstange angeordnete, relativ zur ersten Fühlerstange (15) bewegbare erste Induktionsspule (15') umfaßt, wobei die erste Fühlerstange (15) und die erste Induktionsspule (15') derart zusammenwirken, daß die Position des Hydraulikkolbens ermittelbar ist.

15. Vorrichtung nach Anspruch 13 oder 14, **dadurch gekennzeichnet, daß** die Vorrichtung wenigstens eine zweite, im Inneren der Kolbenstange (4) angeordnete Fühlerstange (16) und wenigstens eine in dem zweiten Kolben (12) angeordnete, relativ zur zweiten Fühlerstange (16) bewegbare, zweite Induktionsspule (16') umfaßt, wobei die zweite Fühlerstange (16) und die zweite Induktionsspule (16') derart zusammenwirken, daß die Position des zweiten Kolbens (12) ermittelbar ist.

16. Vorrichtung nach Anspruch 13, **dadurch gekennzeichnet, daß** die Vorrichtung wenigstens eine erste, in das Innere der Kolbenstange (4) vorstehende Fühlerstange (15) mit einer ersten, in der Fühlerstange (15) integrierten Induktionsspule sowie einen an einem Ende der Kolbenstange angeordneten, relativ zur ersten Fühlerstange (15) bewegbaren ersten Magneten umfasst, wobei die erste Induktionsspule und der erste Magnet derart zusammenwirken, daß die Position des Hydraulikkolbens ermittelbar ist.

17. Vorrichtung nach Anspruch 13 oder 16, **dadurch gekennzeichnet, daß** die Vorrichtung wenigstens eine zweite, im Inneren der Kolbenstange (4) angeordnete Fühlerstange (16) mit einer zweiten, in der Fühlerstange integrierten Induktionsspule umfasst, sowie wenigstens einen zweiten, in dem zweiten Kolben (12) angeordneten, relativ zur zweiten Fühlerstange (16) bewegbaren Magneten umfasst, wobei die zweite Induktionsspule und der zweite Magnet derart zusammenwirken, dass die Position des zweiten Kolbens (12) ermittelbar ist.

18. Vorrichtung nach Anspruch 15 in Abhängigkeit von Anspruch 14 oder Anspruch 17 in Abhängigkeit von Anspruch 16, **dadurch gekennzeichnet, daß** die erste und die zweite Fühlerstange (15, 16) teleskopartig miteinander verbunden sind.
